# EUROPÄISCHE PATENTSCHRIFT

(11) **EP 3 962 328 B1**
(45) Veröffentlichungstag und Bekanntmachung des Hinweises auf die Patenterteilung: **08.04.2026**
(21) Anmeldenummer: 20723324.8
(22) Anmeldetag: 28.04.2020
(51) Int. Cl.: A47J 19/02, A47J 43/08, A47J 43/044

(54) **ZENTRIFUGALER GETRÄNKEBEREITER ZUR HERSTELLUNG VON SAFT ODER PFLANZENMILCH**
CENTRIFUGAL BEVERAGE MAKER FOR PRODUCING JUICE OR PLANT MILK
PRÉPARATEUR DE BOISSON CENTRIFUGE POUR LA PRODUCTION DE JUS OU DE LAIT VÉGÉTAL

(30) Priorität: 29.04.2019 DE 102019206094
(43) Veröffentlichungstag der Anmeldung: 09.03.2022
(73) Patentinhaber: De'Longhi Braun Household GmbH, 63263 Neu-Isenburg (DE)
(72) Erfinder: HEILIG, Thomas, 60318 Frankfurt am Main (DE)
(74) Vertreter: Hoffmann Eitle
(86) Internationale Anmeldenummer: PCT/EP2020/061747
(87) Internationale Veröffentlichungsnummer: WO 2020/221736

(56) Entgegenhaltungen:
- WO-A1-2010/081253
- JP-B2- 5 682 155
- US-A- 5 074 201
- US-A1- 2013 003 489

## Beschreibung

### TECHNISCHES GEBIET

Die vorliegende Erfindung betrifft ein Gerät zur Herstellung von Säften oder Pflanzenmilch, wie z.B. Frucht- oder Gemüsesäften oder Sojamilch das das Trennen der festen Pflanzenreste von der Flüssigkeit vereinfacht und keine nachträgliche Filterung benötigt.

Sojamilch ist ein aus Sojabohnen hergestelltes pflanzliches Getränk. Ihr Aufbau und ihre Verwendungsmöglichkeiten ähneln denen der Milch. Traditionelle Sojamilch, eine stabile Emulsion aus Öl, Wasser und Proteinen, ist ein flüssiger Extrakt aus ganzen Sojabohnen. Die Flüssigkeit wird durch das Einweichen trockener Sojabohnen hergestellt, die anschließend mit Wasser ausgedrückt werden. Eingeweichte Sojabohnen werden in dieser Anmeldung als Sojabohnenmasse bezeichnet.

### STAND DER TECHNIK

In neuerer Zeit gibt es einen verstärkten Trend zur eigenen Herstellung von Lebensmitteln aus Grundzutaten gegenüber dem Kaufen von Fertigprodukten. Zu diesem Zweck werden Küchengeräte in verschiedenen Varianten verwendet, beispielsweise um Fruchtsäfte oder Pflanzenmilch herzustellen. Auf dem Gebiet der veganen Ernährung oder bei Menschen mit Laktoseintoleranz ist pflanzliche Milch, und insbesondere Sojamilch, eine beliebte Alternative zu Kuhmilch.

Üblicherweise wird Pflanzenmilch wie Soja- oder Mandelmilch in Suppenkochern oder Mixern hergestellt, in denen die Zutaten zusammen mit Wasser zerkleinert werden. In jedem Fall muss die Suspension aus Zutaten und Wasser nach der Zerkleinerung gefiltert werden. Üblicherweise wird die Pflanzenmilch durch Siebe oder Handtücher gefiltert. Ein großer Nachteil dieser Prozedur sind einerseits ein hoher Anteil an in der Restmasse verbleibender Pflanzenmilch oder das Nasswerden der Hände durch das manuelle Auspressen der Restmasse in einem Handtuch.

Ein weiteres Verfahren zur Herstellung ist die Benutzung eines zylindrischen Filters, der in einen Krug eines Standmixers eingesetzt wird. Im Fall der Sojamilch wird die Sojabohnenmasse (in Wasser eingeweichte Sojabohnen) in diesem Filter zerkleinert, so dass die Sojamilch aus dem Filter fließen und sich im Krug des Mixers sammeln kann. Jedoch bleibt auch bei dieser Methode eine hohe Menge an Sojamilch in der Restmasse zurück, die, wie oben beschrieben, manuell aus der Restmasse gelöst werden muss, oder die sonst mit der Restmasse entsorgt wird.

Eine solche Lösung findet sich beispielsweise in der EP 1 836 905 A1. In dieser wird die Sojabohnenmasse innerhalb eines Filters zerkleinert und die Sojamilch aus dem Filter geführt. Im Anschluss daran wird die Gesamtmasse an Sojamilch und Restmaterial im Krug ruhen gelassen, damit das Restmaterial sich im Krug absetzt und nur gelöste Sojamilch über den Ausguss des Krugs ausgegossen wird. Es findet kein Trennen der in der Restmasse verbliebenen Sojamilch von der Restmasse statt.

Frucht- und Gemüsesäfte werden üblicherweise in Entsaftern gewonnen. Diese werden in zwei grundsätzlichen Bauarten angeboten. Beim Zentrifugalentsafter werden die Zutaten in ein schnell rotierendes Sieb mit integriertem Schnitzelwerk gefüllt. Darin werden die Zutaten durch das Schnitzelwerk zerkleinert und der Saft durch die Fliehkraft aus dem Sieb herausgedrückt. Ein solches Sieb ist beispielsweise in DE 17 47 531 U gezeigt.

Die sogenannten "Slow Juicer" pressen die Lebensmittel mit einer sich verjüngenden Förderschnecke durch ein Sieb, wodurch der Saft extrahiert wird. Ein solches Gerät ist beispielsweise in US 2017/0231414A1 gezeigt.

Beide Systeme haben den Nachteil, dass es sich dabei um spezialisierte Geräte handelt, die nur für die Saftherstellung verwendbar sind. Sie sind zudem sehr groß und die Reinigung ist aufwändig. Dadurch sind sie vor allem zur Herstellung von kleinen Saftmengen geeignet oder sind bei begrenztem verfügbaren Stauraum für den Benutzer wenig attraktiv.

Beide Geräte sind nicht für die Herstellung von Sojamilch geeignet, da es damit nicht möglich ist, die Zutaten zusammen mit Wasser zu zerkleinern.

Die JP 5 682155 B2, WO 2010/081253 A1, US 5 074 201 A und US 2013/003489 A1 bilden weiteren Stand der Technik.

### DARSTELLUNG DER ERFINDUNG

Die vorliegende Erfindung stellt einen Getränkebereiter zur Herstellung von Frucht- oder Gemüsesäften oder Pflanzenmilch zur Verwendung mit einem handgehaltenen Küchengerät bereit, der das Trennen der festen Pflanzenreste von der Flüssigkeit vereinfacht und keine nachträgliche Filterung benötigt. Durch die vereinfachte Trennung der Pflanzenreste von der Flüssigkeit entfallen vor allem beim Zubereiten von Sojamilch manuelle Nachbereitungsschritte, wie das manuelle Auspressen der Sojabohnenreste durch ein Tuch, wobei die Menge Sojamilch, die in den Sojabohnenresten verbleibt, stark reduziert wird.

Erfindungsgemäß wird diese Aufgabe durch einen Getränkebereiter mit den Merkmalen des Anspruchs 1 gelöst. Bevorzugte Merkmale von Ausführungsformen finden sich in den Unteransprüchen.

Die vorliegende Erfindung stellt einen Getränkebereiter bereit. Dieser Getränkebereiter weist einen Filter zur Aufnahme der Zutaten (z.B. Sojabohnenmasse oder Früchte), einen Antrieb, ein Zerkleinerungswerkzeug und einen Krug auf. Der Filter ist im Krug angeordnet und ermöglicht das Einführen des Zerkleinerungswerkzeugs in den Filter. Der Antrieb treibt bei der Herstellung der Getränke in einem ersten Schritt das Zerkleinerungswerkzeug an, wobei die Zutaten mit dem Zerkleinerungswerkzeug im Filter zerkleinert werden, um daraus eine Dispersion aus der gewünschten Flüssigkeit (Pflanzenmilch oder Saft) und festem Restmaterial zu erzeugen. In einem zweiten Schritt rotiert der Antrieb den Filter. Dazu wird das Zerkleinerungswerkzeug aus dem Filter entnommen und der Antrieb von diesem getrennt. Der Antrieb wird mit Hilfe eines Deckels oder Adapters auf den Krug aufgesetzt und so in Wirkverbindung mit dem rotierbaren Filter gebracht. Der Filter wird nach der Zerkleinerung der Zutaten rotiert, um die flüssige Pflanzenmilch bzw. den Saft durch die Zentrifugalkraft von dem verbleibenden Restmaterial zu trennen.

Dadurch, dass der Filter direkt vom Behälter umschlossen ist, können bei der Herstellung von Sojamilch die Sojabohnen und das zusätzlich benötigte Wasser zusammen in den Getränkebereiter eingefüllt werden, ohne dass das Wasser abfließen kann, und somit beim Zerkleinern der Bohnen immer noch mit diesen in Verbindung steht.

Durch die Zerkleinerung der Zutaten befindet sich im Filter eine Masse aus Pflanzenmilch bzw. Saft und Restmaterial. Ein Teil der Flüssigkeit kann durch den Filter in den Krug des Getränkebereiters fließen, ein Teil bleibt jedoch im Restmaterial gebunden. Durch die Rotation des Filters wirken Zentrifugalkräfte auf die Masse und lassen die Flüssigkeit aus dem Restmaterial austreten. Nachdem der Filter ausreichend lange rotiert wurde, ist die Flüssigkeit vom Restmaterial zumindest im Wesentlichen getrennt im Krug gesammelt. Es sind keine weiteren Schritte nötig, um die Masse auszupressen, wie etwa das Drücken mit einem Stößel oder das Pressen durch ein Tuch. Das Restmaterial kann mit dem Filter entnommen werden, um separat entsorgt oder anderweitig weiterverarbeitet zu werden.

Um ein Zurückfließen der Flüssigkeit in den Filter zu verhindern, muss diese vor und während des Rotierens ggf. abgegossen werden. Alternativ kann der Abstand zwischen der Unterseite des Filters und dem Boden des Kruges so gewählt werden, dass sich die gesamte zu verarbeitende Flüssigkeitsmenge in diesem Bereich sammeln kann. Ein Zurückfließen in den Filter ist dann auch ohne zwischenzeitiges Abgießen ausgeschlossen.

In einer bevorzugten Ausführungsform ist der Filter zylindrisch.

Eine zylindrische Form des Filters bewirkt eine gleichmäßige Belastung des Filters während der Rotation. Im Fall einer Filterkonstruktion mit Eckpunkten kann sich zum Startzeitpunkt der Rotation mehr Masse in einer Ecke des Filters befinden, dies würde zu einer Unwucht im Filter führen. Durch eine solche Unwucht werden Lagerstellen und Material übergebührlich belastet und es treten unerwünschte Vibrationen auf. Bei der Verwendung eines zylindrischen Filters wird eine günstigere Massenverteilung während der Rotation begünstigt. Ferner wird durch einen zylindrischen Filter der Platz im Krug besser ausgenutzt, da bei einem nicht-zylindrischen Filter bei einer Rotation mehr Platz um diesen herum gelassen werden müsste.

Weiter bevorzugt weist der Filter ein Gehäuse auf, in dem eine Filterfläche angeordnet ist, wobei diese Filterfläche bevorzugt ein Metall- oder Kunststoffsieb ist.

Durch eine Filterfläche kann die Flüssigkeit während der Rotation des Filters entweichen, während das Restmaterial innerhalb des Filters bleibt. Eine Filterfläche aus Metall oder Kunststoff ist wiederverwendbar und lässt sich mit gängigen Haushaltmitteln reinigen. Denkbar wäre beispielsweise eine Filterfläche in Form eines perforierten Metallblechs oder in Form eines Gitters ähnlich zu einem Haushaltssieb. Besonders bevorzugt wird, dass das Sieb ausgetauscht werden kann. Hierdurch kann es leichter ausgetauscht werden, und man kann auch je nach Bedarf verschiedene Siebe für verschiedene Anwendungen einsetzen.

In einer weiteren bevorzugten Ausführungsform weist der Filter einen Filterdeckel zum Verschließen des Filters auf.

Durch ein Verschließen des Filters mit einem Filterdeckel wird verhindert, dass Restmaterial während der Rotation aus dem Filter entweichen kann. Weiterhin lässt sich auf einem Filterdeckel mit geringem Aufwand eine Kopplungsstelle für die Verbindung des Antriebs mit dem Filter erstellen, bevorzugt entlang der Rotationsachse des Filters.

In einer bevorzugten Weiterbildung weist der Filter ein Lager auf, wobei der Filter mit dem Lager auf einer Lagerstelle im Krug angeordnet ist.

Durch ein Lager, bevorzugt auf der Unterseite des Filters, kann der Filter auf einer Lagerstelle im Krug angeordnet werden. Durch ein Lager werden die Reibung und der Verschleiß des Filters sowie des Kruges verringert. Durch die Rotation des Filters kann es ansonsten zu einem Materialversagen kommen. Eine solche Lagerstelle kann beispielsweise eine bereits vorhandene Lagerstelle für die Aufnahme eines Messers oder Knethakens sein. Somit kann ein Krug sowohl für die Rotation eines Filters als auch für die Zerkleinerung von anderen Lebensmitteln oder zum Kneten, genutzt werden. Weiterhin ermöglicht eine gleiche Gestaltung der Lagerstelle für verschiedene Zwecke eine Verwendbarkeit für verschiedene Zwecke und kann, je nach Ausprägung der Lagerstelle, die Fertigung vereinfachen.

In einer bevorzugten Weiterbildung weist der Krug einen Krugdeckel zum Verschließen des Krugs auf, wobei im Krugdeckel ein Getriebe angeordnet sein kann, über das der Antrieb mit dem Filter verbunden werden kann. Durch dieses Getriebe kann der Filter mit einer gegenüber dem Zerkleinerungswerkzeug veränderten Drehzahl rotiert werden.

Eine solche Weiterbildung hat den Vorteil, dass bei der Verwendung eines Antriebs mit nicht regelbarer Drehzahl eine unterschiedliche Rotationsgeschwindigkeit des Zerkleinerungswerkzeuges und des Filters erreicht werden kann. Ebenso können durch ein solches Getriebe die übertragbaren Kräfte erhöht werden. So kann ein Antrieb ein Zerkleinerungswerkzeug mit hoher Drehzahl antreiben, um die Masse zu zerkleinern. Dieser Vorgang erfordert relativ geringe Kräfte beziehungsweise Drehmomente für den Antrieb, aber benötigt hohe Drehzahlen. Durch das Getriebe wird dann die Drehzahl des Filters untersetzt, so dass sich dieser mit einer geringeren Rotationsgeschwindigkeit dreht als das Zerkleinerungswerkzeug, es wird jedoch ein ein höheres Drehmoment zur Verfügung gestellt, was zum Beschleunigen der großen Masse des gefüllten Filters nötig ist.

Der Krug kann eine zylindrische oder kegelabschnittsförmige Grundform haben, wie dies bei Haushaltsgeräten üblich ist.

Alternativ kann der Krug eine kugelförmige oder ellipsoide Grundform haben. Dadurch kann bei gleicher Bauhöhe ein größeres Volumen realisiert werden, so dass der Raum zwischen Krug und Filter mehr Flüssigkeit aufnehmen kann.

Als Alternativen können der Krugdeckel und der Filterdeckel als integrales Bauteil ausgebildet sein, oder beide Deckel können als separate Bauteile ausgeführt sein. Falls beide als integrales Bauteil ausgebildet sind, d.h. wenn sie für den Benutzer (werkzeugfrei) unlösbar sind, wird durch das Verschließen des Krugs automatisch auch der Filter verschlossen. Dies erleichtert die Bedienung des Sojamilchbereiters.

In einer weiteren bevorzugten Ausführungsform ist das Zerkleinerungswerkzeug über einen Freilauf im Filter angeordnet. Dabei kann das Zerkleinerungswerkzeug in einer ersten Drehrichtung relativ zum Filter rotieren und die Zutaten zerkleinern. Der Filter wird dabei über einen in der Lagerstelle zwischen Filter und Krug angeordneten Freilauf daran gehindert, sich mit dem Zerkleinerungswerkeug mitzudrehen In einer zweiten Drehrichtung, die zur ersten entgegengesetzt ist, bewirkt ein zweiter Freilauf in der Lagerstelle zwischen Zerkleinerungswerkzeug und Filter, dass der Filter vom Zerkleinerungswerkzeug mitgenommen wird und sich beide in gleicher Richtung und Geschwindigkeit drehen. Dabei wird die Flüssigkeit durch die Zentrifugalkraft von dem verbleibenden Restmaterial getrennt.

Durch eine solche Ausführungsform ist es möglich, die Funktionen des Getränkebereiters ohne ein Umstecken oder eine sonstige Variation der Verbindung des Antriebs zum Filter oder zum Zerkleinerungswerkzeug vorzunehmen. Die jeweils gewünschte Funktion kann alleine durch die Wahl der Drehrichtung erreicht werden. In der ersten Drehrichtung wird nur das Zerkleinerungswerkzeug angetrieben, somit wwerden die Zutaten im Filter zerkleinert und Flüssigkeit und Restmaterial erzeugt. Anschließend kann die Drehrichtung des Antriebs umgekehrt werden und somit durch die Zentrifugalkraft die im Restmaterial enthaltene Flüssigkeit vom Restmaterial getrennt werden.

Eine weitere Variante davon stellt ein in der Höhe arretierbares Messer dar, welches sich direkt im Filter befindet. Dazu dient eine Achse mit mindestens zwei Arretierpositionen. Dabei kann das Messer im ersten Schritt in der oberen Position arretiert werden, in der es sich frei dreht, der Filter steht dabei fest oder rotiert langsam in derselben Richtung mit. In der ersten Arretierposition ist ein Zerkleinern der im Filter befindlichen Zutaten für Pflanzenmilch oder Frucht- bzw. Gemüsesaft möglich. Im Anschluss kann das Messer in die untere Arretierpostion verschoben werden. In dieser Position geht es eine formschlüssige Verbindung mit dem Filter ein, dies führt dazu, dass nun Messer und Filter bei Starten des Motors in derselben Richtung und Geschwindigkeit rotieren. Dies führt zu einem Zentrifugieren der Pflanzenreste führen. Dadurch kann, im Gegensatz zu der zuvor beschriebenen Variante, ein Motor verwendet werden, der nur in eine Drehrichtung rotieren kann.

Bevorzugt ist das Zerkleinerungswerkzeug ein Messerkopf und der Antrieb das Handteil eines Stabmixers.

Messerköpfe sind übliche Zerkleinerungswerkzeuge für Lebensmittel und kommen sowohl in Stand- wie auch Stabmixern zum Einsatz. Ein Messerkopf ist in diesem Zusammenhand eine Nabe, an der seitlich eine oder mehrere Klingen angeordnet sind. Durch Rotation um die Achse der Nabe werden die Klingen rotiert und zerschneiden so das eingebrachte Schnittgut. In einigen Fällen sind die Klingen dabei so an der Nabe angeordnet, dass sie ähnlich wie ein Propeller eine Sogwirkung auf das Schnittgut ausüben. Somit wird eine Umwälzung und Zuführung des Schnittgutes zu dem Messerkopf sichergestellt.

Stabmixer sind Handhabungsgeräte für den Haushalt, die üblicherweise ein Handteil und einen Aufsatz mit einem Werkzeug aufweisen. Das Handteil enthält dabei einen Motor mit einer Abtriebswelle, die mit einer Welle im Aufsatz gekoppelt werden kann, um diese anzutreiben. Viele Stabmixer weisen dabei Kopplungsstellen auf, über die sie mit verschiedenen Aufsätzen mit unterschiedlichen Funktionen gekoppelt werden können. So kann ein Stabmixer mit einem Aufsatz zerkleinern und mit einem zweiten Aufsatz verrühren. Für die vorliegende Erfindung kann ein Stabmixer mit einem Aufsatz mit einem Messerkopf verwendet werden, um die Zutaten (z.B. Sojabohnenmasse oder Früchte) zu zerkleinern und die darin enthaltene Flüssigkeit herauszulösen. Im nächsten Schritt kann der Aufsatz mit dem Messerkopf abgenommen werden und stattdessen der Filter selbst mit dem Handteil gekoppelt werden. Zu diesem Zweck muss der Filter nur eine geeignete Kopplungsstelle für das Handteil aufweisen. Auf diese Weise kann der Filter mit der Abtriebswelle des Motors gekoppelt werden und durch diesen rotiert werden, um die Flüssigkeit durch Zentrifugalkraft von dem verbleibenden Restmaterial zu trennen.

Weiterhin stellt die Erfindung ein Verfahren zum Erzeugen von Pflanzenmilch oder Frucht- und Gemüsesäften bereit. Bei diesem Verfahren werden die Ausgangszutaten in einen Filter gegeben. Anschließend werden diese mit einem angetriebenen Zerkleinerungswerkzeug zerkleinert und eine Masse aus Flüssigkeit und festem Restmaterial erzeugt. Nach der Erzeugung von Flüssigkeit und Restmaterial im Filter wird der Filter rotiert, wobei die Flüssigkeit durch Zentrifugalkraft von dem verbleibenden Restmaterial getrennt wird.

Durch die Anwendung dieses Verfahrens, insbesondere auf einen wie oben beschriebene Getränkebereiter, können die vorteilhaften Effekte der Erfindung erreicht werden.

Bevorzugt wird dabei der Filter in einem Krug zur Aufnahme der erzeugten Flüssigkeit angeordnet. Bevorzugt ist das Zerkleinerungswerkzeug ein Messerkopf und weiter bevorzugt werden das Zerkleinerungswerkzeug und die Rotation des Filters durch das Handteil eines Stabmixers angetrieben.

Der Vorteil der beschriebenen Ausführungsformen des Getränkebereiters haben mehrere Vorteile gegenüber den eingangs erwähnten bekannten Geräten.

Bei der Bereitung von Pflanzenmilch entfällt ein manuelles Filtern oder Pressen der zerkleinerten Pflanzenmilchmasse, um die Flüssigkeit zu extrahieren. Zudem ist der beschriebene Getränkebereiter universeller einsetzbar, da er sowohl für die Bereitung von Pflanzenmilch als auch von Säften einsetzbar ist. Der Getränkebereiter ist zudem kein großes, spezialisiertes Einzelgerät, sondern ein kompaktes Zubehör für einen Stabmixer. Dadurch ist er besonders für die Zubereitung von kleineren Mengen geeignet und kann gut in einer Spülmaschine gereinigt werden. Dadurch, dass Teile des Getränkebereiters auch für andere Anwendungen einsetzbar sind (z.B. Krug, Behälterdeckel, Motor, Zerkleinerungswerkzeug), ist der Platzbedarf insgesamt deutlich geringer als bei spezialisierten Entsaftern.

Weitere bevorzugte Merkmale und Vorteile ergeben sich aus der nachfolgenden Figurenbeschreibung und der Gesamtheit der Patentansprüche.

### KURZE FIGURENBESCHREIBUNG

Die Erfindung wird im folgenden Abschnitt anhand von Ausführungsbeispielen unter Bezugnahme auf die beiliegenden
Figuren näher erläutert.
Figur 1 zeigt eine Filterbaugruppe gemäß einem Ausführungsbeispiel der vorliegenden Erfindung.
Figur 2 zeigt einen Getränkebereiter in einer ersten Konfiguration gemäß einem Ausführungsbeispiel der vorliegenden Erfindung.
Figur 3 zeigt einen weiteren Getränkebereiter gemäß einem Ausführungsbeispiel der vorliegenden Erfindung.
Figur 4 zeigt einen weiteren Getränkebereiter gemäß einem Ausführungsbeispiel der vorliegenden Erfindung.
Figuren 5 und 6 zeigen einen Getränkebereiter gemäß einem weiteren Ausführungsbeispiel der vorliegenden Erfindung.
Figur 7 zeigt zwei Stufen eines Verfahrens gemäß einem Ausführungsbeispiel der vorliegenden Erfindung.

### WEGE ZUR AUSFÜHRUNG DER ERFINDUNG

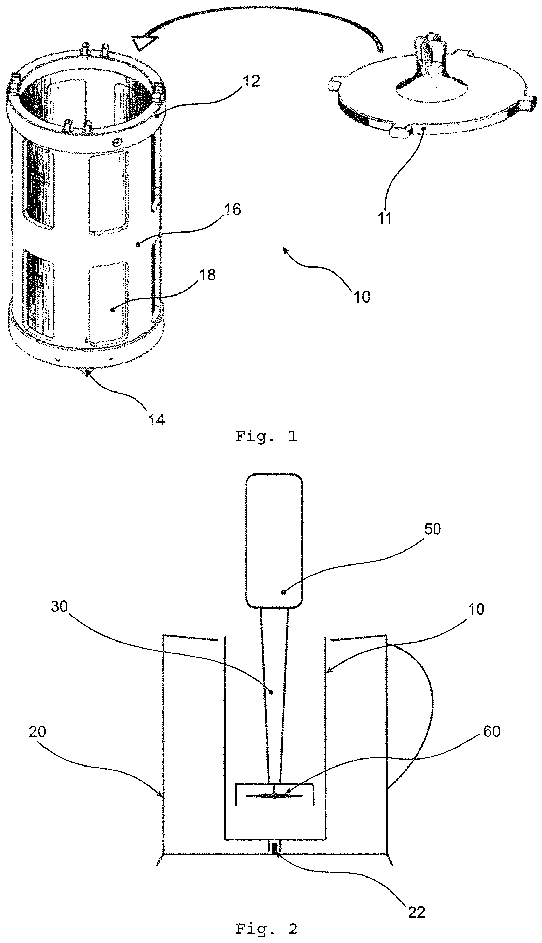

Fig. 1 zeigt einen Filter 10 für einen Sojamilchbereiter. Der Filter 10 ist zylindrisch und weist einen Deckel 11, eine Oberseite 12, ein Gehäuse 16, eine Filterfläche 18 und ein Lager 14 an der Unterseite des Filters 10 auf. Der Deckel 11 kann über eine Steck- oder Schraubverbindung mit dem Filter 10 verbunden werden und dient dazu, ein Austreten der Sojabohnenmasse aus dem Filter 10 zu verhindern. Weiterhin bietet der Deckel 11 eine Kopplungsstelle auf der Mittelachse A des Filters 10, über die ein Motor 50 mit dem Filter 10 gekoppelt werden kann.

Fig. 2 zeigt den Filter 10 aus Fig. 1 in einer Einbausituation. Der Filter 10 ist mit dem Lager 14 auf einer Lagerstelle 22 in einem Krug 20 platziert. In dieser Situation kann der Filter 10 mit Zutaten (z.B. Sojabohnen und Wasser oder Früchte) befüllt werden. Anschließend wird ein Stabmixer in den Filter eingeführt. Der Motor 50 des Stabmixers überträgt durch den Schaft 30 des Stabmixers ein Drehmoment auf den Messerkopf 60, mit dem die Zutaten zerkleinert werden. Durch diesen Vorgang wird ein Teil der Flüssigkeit aus den Zutaten gelöst und kann durch den Filter 10 in den Krug 20 fließen. Um eine Rotation des Filters 10 während dieses Prozesses zu verhindern, kann dieser im Krug 20 festgesetzt werden.

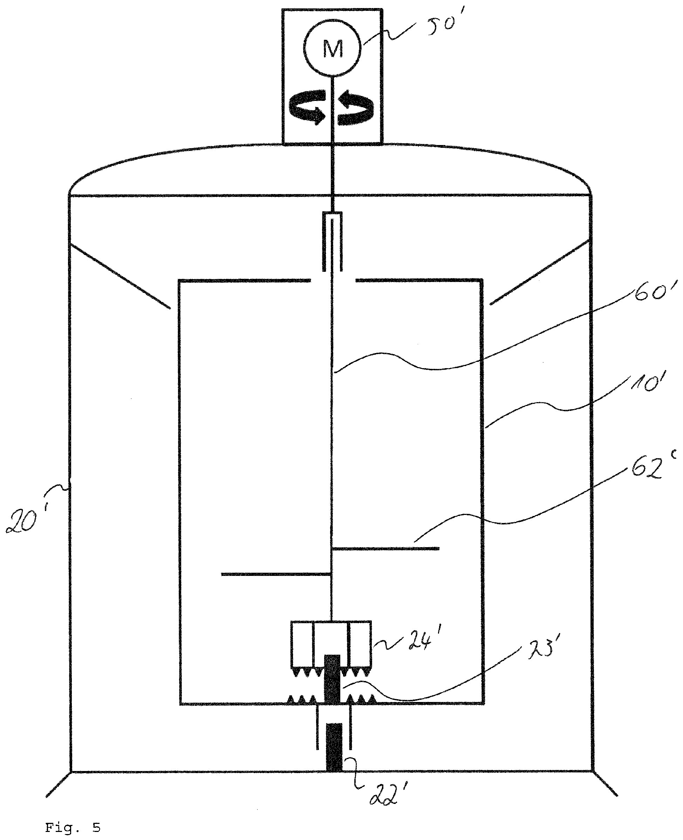

Im nächsten Schritt kann der Motor 50 des Stabmixers vom Schaft 30 getrennt und über den Filterdeckel 11 und den Krugdeckel 40 mit dem Filter 10 verbunden werden. Diese Situation ist in Fig. 5 auf der rechten Seite dargestellt. Durch das Drehmoment des Motors 50 wird der Filter mit der darin enthaltenen zerkleinerten Masse rotiert. Durch die entstehende Zentrifugalkraft wird die Masse gegen die Wände des Filters 10 gedrückt und die in der Masse noch gebundene Flüssigkeit wird durch die Filterfläche 18 in den Krug 20 gepresst. Nach einer ausreichenden Rotation des Filters 10 ist die Flüssigkeit im Großen und Ganzen vom Restmaterial getrennt und nur Restmaterial bleibt im Filter 10 zurück. Dieses kann mit dem Filter 10 entnommen und separat entsorgt oder anderweitig verwendet werden.

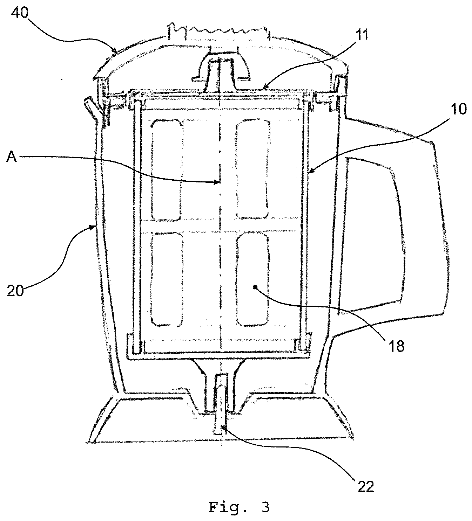

Fig. 3 zeigt eine alternative Form der Verwendung des Filters des Getränkebereiters aus Fig. 1**.** Bei dieser Variante verschließt ein separater Krugdeckel 40 den Krug 20. In diesem Krugdeckel 40 ist ein Übersetzungsgetriebe angeordnet, das mit der Kopplungsstelle des Filterdeckels 11 oder mit dem Filter 10 direkt gekoppelt wird. Im Anschluss an das Zerkleinern der Zutaten wird der Motor 50 des Stabmixers mit dem Getriebe des Krugdeckels 40 so gekoppelt, dass dieses die Drehzahl des Stabmixers übersetzt. So kann die Rotationsgeschwindigkeit für das Rotieren des Filters 10 geringer oder höher als die Rotationsgeschwindigkeit des Messerkopfes 60 sein, ohne einen Motor mit regelbarer Drehzahl verwenden zu müssen. Es ist möglich, dass der Messerkopf mit einer hohen Drehzahl und einem geringen Drehmoment betrieben wird, da die Schnittkräfte zum Zerkleinern der Zutaten relativ gering sind, während die Rotation des Filter aufgrund der höheren bewegten Masse ein höheres Drehmoment erfordert. Durch das Getriebe im Krugdeckel 40 können beide Funktionen mit einem Motor 50 mit konstanter Drehzahl gewährleistet werden.

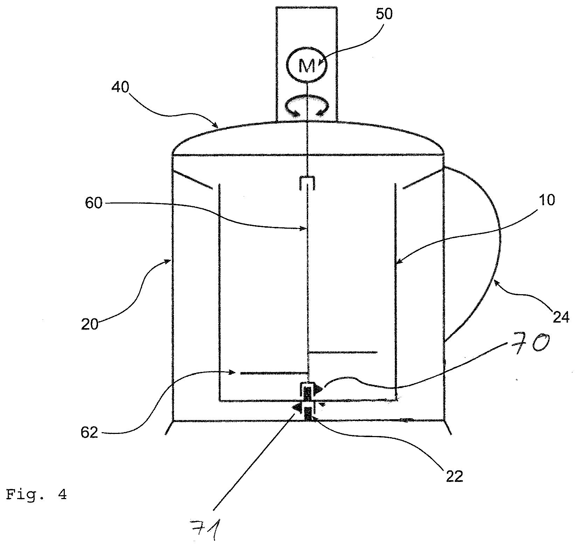

Eine weitere Ausführungsform zeigt Fig. 4**.** In dieser befindet sich in der Lagerstelle zwischen Filter 10 und Messerkopf 60 ein Freilauf 70. Über den Krugdeckel 40 wird der Messerkopf 60 angetrieben. Dabei wird der Filter 10 in einer ersten Drehrichtung durch den Freilauf 70 nicht oder nur unwesentlich mitgedreht, so dass in dieser Drehrichtung eine Relativbewegung zwischen den Klingen 62 des Messerkopfes 60 und der Zutaten im Filter 10 auftritt und die Sojabohnen zerkleinert werden. Um ein ungewolltes Mitdrehen des Filters 10 zu vermeiden, kann der Filter in dieser Drehrichtung zusätzlich durch einen zweiten, entgegengesetzt wirkenden, Freilauf 71 in der Lagerstelle zwischen Krug 20 und Filter 10 fixiert werden.

In einer zweiten Drehrichtung blockiert der Freilauf 70 zwischen Filter 10 und Messerkopf 60. Aufgrund dieser Blockierung wird der Filter 10 mit dem Messerkopf 60 mitgedreht, es kommt zu den vorher beschriebenen Zentrifugalkräften und die in der Zutatenmasse verbliebene Flüssigkeit wird durch die Filterfläche 18 in den Krug 20 gepresst. In dieser zweiten Drehrichtung erlaubt der zweite Freilauf 71 zwischen Filter 10 und Krug 20 eine Relativbewegung zwischen Krug und Filter.

Diese Variante lässt sich ebenfalls mit einem Getriebe im Krugdeckel 40 betreiben, in diesem Fall muss das Getriebe jedoch ebenfalls drehrichtungsabhängig sein, um die unterschiedlichen gewünschten Drehzahlen für die jeweilige Funktion zu gewährleisten. Alternativ kann ein Motor mit veränderbarer Geschwindigkeit verwendet werden, der in beiden Drehrichtungen eine verschiedene Drehzahl zur Verfügung stellt.

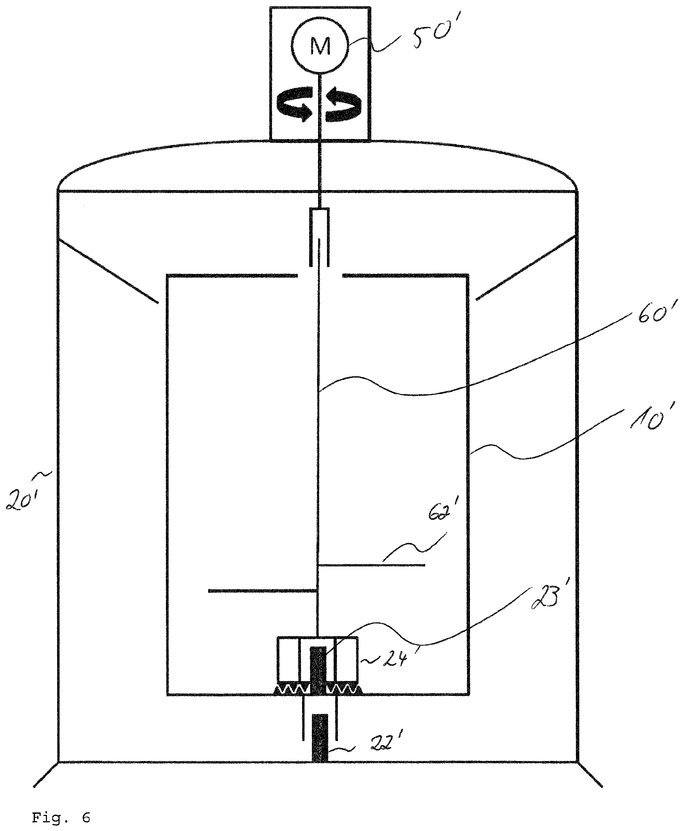

In Figuren 5 und 6 werden im Wesentlichen die gleichen Bezugszeichen wie in Figuren 1 bis 4 verwendet, wobei jeweils ein Apostroph an die Nummern der entsprechenden Komponenten gehängt wurde. In Figuren 5 und 6 ist der Filter 10' auf einer ersten Lagerstelle 22' drehbar gelagert. Im Filter 10' ist wiederum eine zweite Lagerstelle 23' vorgesehen, auf der ein Messerkopf 60' mit Klingen 62' drehbar gelagert ist. Dieser Messerkopf 60' ist mit einem Motor 50' im Eingriff.

Zwischen dem unteren Ende des Messerkopfs 60' und dem Filter 10' befindet sich eine Kupplung 24'. Diese Kupplung 24' ist so ausgestaltet, dass in dem in Figur 5 gezeigten Zustand, in dem das untere Ende des Messerkopfs 60' von dem Filter 10' beabstandet ist, der Messerkopf 60' frei bezüglich des Filters 10' beweglich und somit im Freilauf ist. In diesem Zustand führt eine Drehung des Motors 50' dazu, dass sich der Messerkopf 60' in dem Filter 10' bewegt, während der Filter 10' nicht angetrieben wird, so dass er sich nicht oder nur unwesentlich bezüglich des Krugs 20' bewegt. In dieser Konfiguration können in den Filter 10' eingefüllte Lebensmittel zerkleinert werden.

Wenn nun der Messerkopf 60' auf den Filter 10' hinabgedrückt wird, gerät die Kupplung 24' in Eingriff (siehe Figur 6). In diesem Zustand ist der Messerkopf 60' drehfest mit dem Filter 10' verbunden. Wenn nun der Motor 50' betrieben wird, dreht dieser den Messerkopf 60' zusammen mit dem Filter 10', so dass diese beide sich nicht (oder nur unwesentlich) zueinander drehen. Jedoch dreht sich nun der Filter 10' bezüglich des Krugs 20', so dass nun ein Getränk, das hergestellt wurde, aufgrund der Zentrifugalkraft nach außen geschleudert wird.

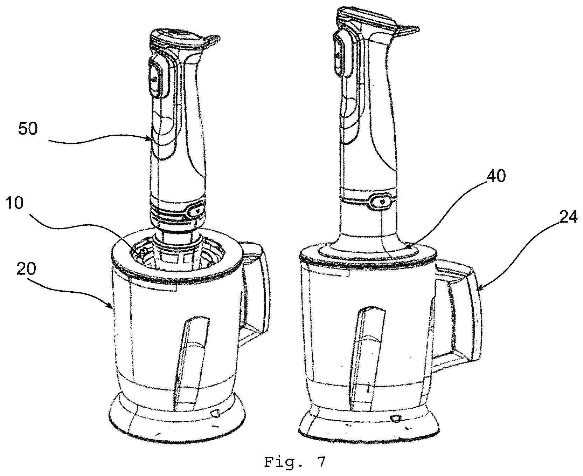

Fig. 7 zeigt die Verwendung eines Stabmixers zur Erzeugung von Getränken in dem Getränkebereiter. Auf der linken Seite ist der Stabmixer im Filter 10 angeordnet. In dem Filter 10 befindet sich Zutatenmasse, die durch den Stabmixer zerkleinert wird, woraufhin Flüssigkeit aus dem Filter 10 in den Krug 20 fließen kann. Im Filter verbleibt eine Restmasse von zerkleinerten Zutaten, in der weiter Flüssigkeit gebunden ist. Auf der rechten Bildhälfte ist der zweite Schritt der Erzeugung des Getränks dargestellt. In diesem Schritt ist der Motor 50 des Stabmixers über den Krugdeckel 40 mit dem Filter 10 gekoppelt und kann diesen rotieren, um die Flüssigkeit durch Zentrifugalkraft von dem verbleibenden Restmaterial zu trennen. Der Krug 20 weist weiterhin einen Griff 25 zur späteren einfachen Handhabung des Krugs 20 auf.

Auch wenn in dieser Anmeldung hauptsächlich auf die Herstellung von Sojamilch Bezug genommen wird, ist es für den Fachmann offensichtlich, dass eine Vorrichtung oder ein Verfahren wie es in dieser Anmeldung offenbart ist für die Herstellung von Saft oder Milch aus zerkleinerten Nüssen, Getreide, Bohnen, Gemüse oder Früchten geeignet ist. Als nicht einschränkende Beispiele seien die Herstellung von Mandelmilch oder Orangensaft genannt. Der guten Ordnung halber ist zu bemerken, dass Begriffe wie "Sojamilch" oder "Mandelmilch" nicht so zu verstehen sind, dass diese Begriffe Milch als tierisches oder menschliches Produkt im eigentlichen Sinne umfassen, sondern dass es sich hierbei um pflanzliche Getränke handelt, die umgangssprachlich als "Milch" bezeichnet werden.

## Patentansprüche

1. Sojamilchbereiter, der einen Filter (10) zur Aufnahme von Sojabohnenmasse, einen Stabmixer mit einem Antrieb (50) und einem Zerkleinerungswerkzeug (60), einen Krug (20) und einen Krugdeckel (40) aufweist,
wobei der Filter (10) im Krug (20) angeordnet ist und das Zerkleinerungswerkzeug (60) an dem Stabmixer in den Filter (10) einführbar ist,
wobei der Antrieb (50) dazu ausgestaltet ist, das Zerkleinerungswerkzeug (60) anzutreiben, um Sojabohnenmasse im Filter (10) zu zerkleinern,
wobei der Filter (10) so angeordnet ist, dass er in dem Krug (20) mittels des Antriebs (50) über den Krugdeckel (40) rotiert werden kann, um die Sojamilch von dem verbleibenden Restmaterial zu trennen.

2. Sojamilchbereiter nach Anspruch 1, wobei der Filter (10) zylindrisch ist.

3. Sojamilchbereiter nach Anspruch 1 oder 2, wobei der Filter (10) ein Gehäuse (16) aufweist, in dem eine Filterfläche (18) angeordnet ist, wobei die Filterfläche bevorzugt ein Metall- oder Kunststoffsieb ist, welches noch stärker bevorzugt bezüglich des Filtergehäuses austauschbar ist.

4. Sojamilchbereiter nach einem der vorigen Ansprüche, wobei der Filter (10) einen Filterdeckel (11) zum Verschließen des Filters (10) aufweist.

5. Sojamilchbereiter nach einem der vorigen Ansprüche, wobei der Filter (10) ein Lager (14) aufweist, wobei der Filter (10) mit dem Lager (14) auf einer Lagerstelle (22) im Krug (20) angeordnet ist.

6. Sojamilchbereiter nach einem der Ansprüche 4 oder 5, wobei der Krug (20) einen Krugdeckel (40) zum Verschließen des Krugs (20) aufweist, wobei im Krugdeckel (40) ein Getriebe (26) angeordnet ist, über das der Antrieb (50) mit dem Filter (10) verbunden werden kann, wodurch der Filter (10) mit einer gegenüber dem Zerkleinerungswerkzeug (60) veränderten Drehzahl rotiert werden kann.

7. Sojamilchbereiter nach Anspruch 6, wobei der Filterdeckel (11) fest mit dem Krugdeckel (40) verbunden ist.

8. Sojamilchbereiter nach einem der vorigen Ansprüche, wobei das Zerkleinerungswerkzeug (60) über einen ersten Freilauf (70) im Filter (10) angeordnet ist, wobei in einer ersten Drehrichtung das Zerkleinerungswerkzeug (60) relativ zum Filter (10) rotieren kann und die Sojabohnenmasse zerkleinert und in einer zweiten, zur ersten Drehrichtung entgegengesetzten, Drehrichtung das Zerkleinerungswerkzeug (60) mit dem Filter (10) rotiert wird, um die flüssige Sojamilch durch Zentrifugalkraft von dem verbleibenden Restmaterial zu trennen.

9. Sojamilchbereiter nach Anspruch 8, wobei der Filter (10) über einen, dem ersten Freilauf (70) entgegenwirkenden, zweiten Freilauf (71) im Krug (20) angeordnet ist, wobei in einer ersten Drehrichtung des Zerkleinerungswerkzeugs (60) der zweite Freilauf (71) eine Rotation zwischen der Filter (10) und Krug (20) verhindert und in einer zweiten, zur ersten Drehrichtung des Zerkleinerungswerkzeugs (60) entgegengesetzten, Drehrichtung eine Rotation zwischen dem Filter (10) und Krug (20) möglich ist.

10. Sojamilchbereiter nach einem der vorigen Ansprüche 8 und 9, wobei das Zerkleinerungswerkzeug (60') axial im ersten Freilauf bewegbar ist und wobei das Zerkleinerungswerkzeug (60') selektiv entweder drehfest mit dem Filter (10') verbunden werden kann oder bezüglich des Filters (10') frei drehbar sein kann.

11. Sojamilchbereiter nach einem der vorherigen Ansprüche, wobei der Krug (20) in der Grundform eine Kugel oder einen Ellipsoid darstellt.

12. Sojamilchbereiter nach einem der vorigen Ansprüche, wobei das Zerkleinerungswerkzeug (60) ein Messerkopf ist und wobei der Antrieb (50) das Handteil eines Stabmixers ist, an dem der Messerkopf vorgesehen ist.

13. Verfahren zum Erzeugen von Sojamilch,
wobei Sojabohnenmasse in einen Filter (10) gegeben wird,
woraufhin die Sojabohnenmasse mit einem angetriebenen Zerkleinerungswerkzeug (60) an einem eingeführten Stabmixer zerkleinert wird und eine Masse aus Sojamilch und Restmaterial erzeugt wird, wobei der Filter (10) in einem Krug (20) zur Aufnahme der Sojamilch angeordnet ist,
woraufhin der Filter (10) über den Antrieb des Stabmixers und mittels eines Krugdeckels (40), rotiert wird, wodurch die Sojamilch von dem Restmaterial getrennt wird.

14. Verfahren nach Anspruch 13,
wobei das Zerkleinerungswerkzeug (60) ein Messerkopf ist und
wobei bevorzugt das Zerkleinerungswerkzeug (60) und die Rotation des Filters durch das Handteil eines Stabmixers angetrieben werden.

## Claims

1. A soy milk maker comprising a filter (10) for receiving soybean mass, a hand blender with a drive (50), a comminuting tool (60), a jug (20), and a jug lid (40),
wherein the filter (10) is disposed in the jug (20) and the comminuting tool (60) on the hand blender is insertable into the filter (10),
wherein the drive (50) is configured to drive the comminuting tool (60) to comminute soybean matter in the filter (10),
wherein the filter (10) is arranged to be rotated in the jug (20) by the drive (50) via the jug lid (40) to separate the soybean milk from the remaining residual material.

2. Soy milk maker according to claim 1, wherein the filter (10) is cylindrical.

3. Soy milk maker according to claim 1 or 2, wherein the filter (10) comprises a housing (16) in which a filter surface (18) is arranged, wherein the filter surface is preferably a metal or plastic screen which is even more preferably replaceable with respect to the filter housing.

4. Soy milk maker according to any one of the preceding claims, wherein the filter (10) comprises a filter cover (11) for closing the filter (10).

5. Soy milk maker according to any one of the preceding claims, wherein the filter (10) comprises a bearing (14), wherein the filter (10) is arranged with the bearing (14) on a bearing point (22) in the jug (20).

6. Soy milk maker according to any one of claims 4 or 5, wherein the jug (20) comprises a jug lid (40) for closing the jug (20), wherein a gear (26) is arranged in the jug lid (40), via which the drive (50) can be connected to the filter (10), whereby the filter (10) can be rotated at a different speed than the comminuting tool (60).

7. The soy milk maker according to claim 6, wherein the filter lid (11) is fixedly connected to the jug lid (40).

8. Soy milk maker according to any one of the preceding claims, wherein the comminuting tool (60) is arranged in the filter (10) via a first freewheel (70), wherein in a first direction of rotation the comminuting tool (60) can rotate relative to the filter (10) and crush the soybean mass and in a second direction of rotation opposite to the first direction of rotation, the comminuting tool (60) is rotated with the filter (10) to separate the liquid soy milk from the remaining residual material by centrifugal force.

9. Soy milk maker according to claim 8, wherein the filter (10) is arranged in the jug (20) via a second free wheel (71) counteracting the first free wheel (70), wherein in a first direction of rotation of the comminuting tool (60), the second freewheel (71) prevents rotation between the filter (10) and jug (20), and in a second direction of rotation opposite to the first direction of rotation of the comminuting tool (60), rotation between the filter (10) and jug (20) is possible.

10. Soy milk maker according to claims 8 and 9, wherein the comminuting tool (60') is axially movable in the first free wheel , and wherein the comminuting tool (60') can be selectively either non-rotatably connected to the filter (10') or freely rotatable with respect to the filter (10').

11. Soy milk maker according to any one of the preceding claims, wherein the jug (20) is a sphere or an ellipsoid in basic shape.

12. Soy milk maker according to any one of the preceding claims, wherein the comminuting tool (60) is a cutter head and wherein the drive (50) is the hand part of a stick blender on which the cutter head is provided.

13. Method for producing soy milk,
wherein soybean mass is fed into a filter (10),
whereupon the soybean mass is comminuted with a driven comminuting tool (60) on an inserted hand blender and a mass of soy milk and residual material is produced, wherein the filter (10) is arranged in a jug (20) for retaining soy milk,
whereupon the filter (10) is rotated via the drive of the hand blender and via a jug lid (40), thereby separating the soy milk from the residual material.

14. Method according to claim 13,
wherein the comminuting tool (60) is a cutter head, and
wherein preferably the comminuting tool (60) and the rotation of the filter are driven by the hand part of a hand blender.

## Revendications

1. Préparateur de lait de soja présentant un filtre (10) pour recevoir de la pâte de soja, un mixeur plongeant avec un entraînement (50) et un outil de broyage (60), un pichet (20) et un couvercle de pichet (40),
dans lequel le filtre (10) est disposé dans le pichet (20) et l'outil de broyage (60) peut être introduit dans le filtre (10) sur le mixeur plongeant,
dans lequel l'entraînement (50) est configuré pour entraîner l'outil de broyage (60) pour broyer de la pâte de soja dans le filtre (10),
dans lequel le filtre (10) est disposé de manière à pouvoir être tourné dans le pichet (20) au moyen de l'entraînement (50) via couvercle de pichet (40) pour séparer le lait de soja de la matière résiduelle restante.

2. Préparateur de lait de soja selon la revendication 1, dans lequel le filtre (10) est cylindrique.

3. Préparateur de lait de soja selon la revendication 1 ou la revendication 2, dans lequel le filtre (10) présente un boîtier (16) dans lequel est disposée une surface filtrante (18), dans lequel la surface filtrante est préférablement un tamis métallique ou plastique, lequel est encore plus préférablement remplaçable par rapport au boîtier de filtre.

4. Préparateur de lait de soja selon l'une quelconque des revendications précédentes, dans lequel le filtre (10) présente un couvercle de filtre (11) pour fermer le filtre (10).

5. Préparateur de lait de soja selon l'une quelconque des revendications précédentes, dans lequel le filtre (10) présente un palier (14), dans lequel le filtre (10) est disposé avec le palier (14) sur un point de palier (22) dans le pichet (20).

6. Préparateur de lait de soja selon l'une quelconque des revendications 4 ou 5, dans lequel le pichet (20) présente un couvercle de pichet (40) pour fermer le pichet (20), dans lequel un engrenage (26) est disposé dans le couvercle de pichet (40) par lequel l'entraînement (50) peut être relié au filtre (10), ce qui permet de faire tourner le filtre (10) à une vitesse modifiée par rapport à l'outil de broyage (60).

7. Préparateur de lait de soja selon la revendication 6, dans lequel le couvercle de filtre (11) est solidaire du couvercle de pichet (40).

8. Préparateur de lait de soja selon l'une quelconque des revendications précédentes, dans lequel l'outil de broyage (60) est disposé via une première roue libre (70) dans le filtre (10), dans lequel dans un premier sens de rotation l'outil de broyage (60) peut tourner par rapport au filtre (10) et broie la pâte de soja et dans un deuxième sens de rotation opposé au premier sens de rotation, l'outil de broyage (60) est tourné avec le filtre (10) pour séparer le lait de soja liquide de la matière résiduelle restante par force centrifuge.

9. Préparation de lait de soja selon la revendication 8, dans lequel le filtre (10) est disposé dans le pichet (20) via une deuxième roue libre (71) opposée à la première roue libre (70), dans lequel dans un premier sens de rotation de l'outil de broyage (60), la deuxième roue libre (71) empêche une rotation entre le filtre (10) et le pichet (20) et dans un deuxième sens de rotation opposé au premier sens de rotation de l'outil de broyage (60), une rotation est possible entre le filtre (10) et le pichet (20).

10. Préparateur de lait de soja selon l'une quelconque des revendications 8 et 9 précédentes, dans lequel l'outil de broyage (60') est mobile axialement dans la première roue libre et dans lequel l'outil de broyage (60') peut sélectivement soit être relié en essai de rotation au filtre (10'), soit être librement rotatif par rapport au filtre (10').

11. Préparateur de lait de soja selon l'une quelconque des revendications précédentes dans lequel le pichet (20) représente dans sa forme de base une sphère ou un ellipsoïde.

12. Préparateur de lait de soja selon l'une quelconque des revendications précédentes, dans lequel l'outil de broyage (60) est une tête de couteau et dans lequel l'entraînement (50) est la pièce à main d'un mixeur plongeant sur laquelle la tête de couteau est prévue.

13. Procédé de production de lait de soja,
dans lequel de la pâte de soja est ajoutée dans un filtre (10),
la pâte de soja est ensuite broyée à l'aide d'un outil de broyage (60) entraîné sur un mixeur plongeant introduit et une masse de lait de soja et de matière résiduelle est générée, dans lequel le filtre (10) est disposé dans un pichet (20) pour recevoir le lait de soja,
le filtre (10) est ensuite tourné via l'entraînement du mixeur plongeant et au moyen d'un couvercle de pichet (40), ce qui sépare le lait de soja de la matière résiduelle restante.

14. Procédé selon la revendication 13,
dans lequel l'outil de broyage (60) est une tête de couteau et
dans lequel l'outil de broyage (60) et la rotation du filtre sont préférablement entraînés par la pièce à main d'un mixeur plongeant.
